Europäisches Patentamt

European Patent Office

Office européen des brevets

(19)

(11)    **EP 1 477 931 A1**

(12)    **EUROPÄISCHE PATENTANMELDUNG**

(43) Veröffentlichungstag:
  **17.11.2004   Patentblatt 2004/47**

(51) Int Cl.⁷: **G06T 3/40**, G09B 29/00

(21) Anmeldenummer: **03010942.5**

(22) Anmeldetag: **15.05.2003**

(84) Benannte Vertragsstaaten:
  **AT BE BG CH CY CZ DE DK EE ES FI FR GB GR
  HU IE IT LI LU MC NL PT RO SE SI SK TR**
  Benannte Erstreckungsstaaten:
  **AL LT LV MK**

(71) Anmelder: **Siemens Schweiz AG
  8047 Zürich (CH)**

(72) Erfinder: **Herbelt, Stefan
  1020 Renens (CH)**

(74) Vertreter: **Kley, Hansjörg
  c/o Siemens AG
  Patentabteilung
  Postfach 22 16 34
  80506 München (DE)**

Bemerkungen:
  Geänderte Patentansprüche gemäss Regel 86 (2)
  EPÜ.

(54)    **Verfahren zur Darstellung von einer Konturen enthaltenden Graphik auf einer Anzeigeeinheit**

(57)    Die Darstellung von Graphiken wie z.B. ein Diagramm oder eine Landkarte auf einer Anzeigeeinheit eines portablen Gerätes erfordert eine Reduktion der Anzahl Pixel. Dies bedingt in jedem Fall eine Zerlegung einer Graphik in eine Anzahl Blöcke. Dazu wird üblicherweise jeder Block einem sogenannten "subsampling" unterzogen. Dabei verschwinden die semantisch bedeutsamen Konturen wenigstens teilweise, so dass der Inhalt der Graphik verloren geht. Zur Lösung dieses Problems wird ein Verfahren vorgeschlagen, dass für eine bestimmte Anwendung den den Konturen zugrunde liegenden Farben eine Gewichtung zuordnet. Bei der Reduktion wird abhängig vom Ergebnis der Gewichtung eine dominante Farbe bestimmt und diese in einem weiteren Verfahrensschritt aus einem Vorrat von vorgegebenen Grund- und Pseudofarben nachgebildet. Auf diese Weise bleiben die semantisch bedeutenden Konturen einer Graphik und damit ihre Lesbarkeit trotz erfolgter Reduktion erhalten.

**FIG 1**

**Beschreibung**

Die vorliegende Erfindung betrifft ein Verfahren zur Darstellung von einer Konturen enthaltenden Graphik auf einer Anzeigeeinheit nach dem Oberbegriff des Patentanspruchs 1.

Die vorliegende Erfindung betrifft das Gebiet der portablen Geräte der Informations- und Kommunikationstechnologie. Bedingt durch die relativ kleine Grösse und die damit verbundene geringe Pixel- und Farbauflösung einer Anzeigeeinheit auf einem portablen Gerät, müssen graphische Darstellungen wie z.B. gewöhnliche Bilder oder spezielle Graphiken zur Darstellung aufbereitet werden. Diese Aufbereitung ist ebenfalls erforderlich für die verkleinerte Darstellung von grossen Karten auf hochauflösenden Bildschirmen oder eine Darstellung mit wenigen Farben zum Zwecke der Bildkompression.

Diese Bilder bzw. Graphiken liegen meist in einem n · m - Pixelformat vor. Jedem Pixel ist dabei eine bestimmte Position innerhalb eines Rasters und eine bestimmte Farbe zugewiesen. Graphiken wie z.B. topographische oder geographische Landkarten sind meist ursprünglich in einer Vektordarstellung vorliegend. Solche Landkarten werden jedoch zur «Veröffentlichung" oder zur Ausgabe an eine Anzeigeeinheit vorgängig in ein Pixelformat der vorgenannten Art umgewandelt.

Die Aufbereitung der Darstellung erfordert eine Reduktion der Anzahl Pixel. Dies erfolgt üblicherweise über eine Auswahl, in der Fachsprache «subsampling" genannt. Dabei kommen Verfahren zur Anwendung wie eine Durchschnittsbildung oder ein Subsampling eines bestimmten Pixel aus einer Matrix von z.B. 4x4 Pixel. Es kann z.B. jeweils dasjenige Pixel herangezogen werden, das sich in der linken oberen Ecke dieser 4 · 4 - Matrix befindet. Diese Verfahren eignen sich durchaus für Bilder, die keine bestimmten Konturen aufweisen. Mit dem Begriff «bestimmten Konturen" ist dabei eingeschlossen, dass diesen Konturen eine definierte Semantik zugewiesen ist, wie beispielsweise im Bereich der Topographie gemäss der nachfolgenden Darstellung in Tabelle 1.

Tabelle 1:

| Semantik der Farben bezüglich der Konturen. | |
|---|---|
| **Kontur** | **Bedeutung** |
| Blaue Linie | Fluss, Bach |
| Blaue Linie die eine hellblaue Fläche begrenzt. | Ufer eines Sees |
| Dünne schwarze Linie | Koordinatengitter |
| Dünne braune Linie | Höhenlinie |
| Grüne Linie, die eine hellgrüne Fläche begrenzt. | Waldrand |

Die vorgenannten Verfahren haben für die Darstellung von solchen Graphiken den Nachteil, dass wegen der Absenz dieser Konturen die Lesbarkeit erheblich beeinträchtigt ist. Der vorgenannte Begriff Kontur und dessen Bedeutung ist dabei keineswegs auf die Kartographie beschränkt, sondern kann z.B. auch angewendet werden auf andere Graphiken wie z.B. ein Kursverlauf oder ein Temperaturverlauf innerhalb eines kartesischen Koordinatensystems.

Die negativen Effekte bei der Darstellung einer Graphik in einer Pixeldarstellung wie z.B. ein Treppeneffekte (Anti-aliasing) können auch durch sogenanntes «super sampling" behoben werden. «Super sampling" bedeutet, dass die Aufbereitung der Pixels zunächst in einem Speicher vorgenommen wird. Dabei ist diesem Speicher virtuell eine höhere Auflösung als die tatsächliche Auflösung auf einer Anzeigeeinheit zugeordnet. Nachteilig ist für dieses Verfahren (auch genannt: «super sampling method of anti-aliasing") der hohe Speicherbedarf und die dazu erforderliche hohe Rechenleistung. Um das Problem des hohen Speicherbedarfes etwas zu entschärfen, wird in EP 1 056 047 A1 vorgeschlagen, dies durch eine gewichtete Zerlegung in drei Grundfarben und eine anschliessende Linearkombination der Farbe für jedes Pixel zu beheben. Dadurch werden aber eine bestimmte Bedeutung aufweisende Konturen nicht besser dargestellt, da auch bei der höheren Auflösung die einzelnen Elemente «flächig" und nicht als Kontur vorliegen.

Der vorliegenden Erfindung liegt daher die Aufgabe zugrunde, ein einfach implementierbares Verfahren zur Darstellung von einer Konturen enthaltenden Graphik auf einer Anzeigeeinheit anzugeben, bei dem die Konturen auch bei einer Reduktion auf eine Darstellung mit geringerer Auflösung erhalten bleiben.

Diese Aufgabe wird erfindungsgemäss durch das im Patentanspruch 1 angegebene Verfahren gelöst.

Durch die Schritte A bis E des erfindungsgemässen Verfahrens, wonach

A Zuordnung einer Gewichtung der Konturen darstellende Farben und der Flächen darstellenden Farben;

B Zerlegung der Graphik in Blöcke;

C Bestimmung der dominanten Farbe (C) eines jeden Blockes ($B_{ij}$) aufgrund der im Verfahrenschritt A erfolgten Gewichtung;

D    Abbildung der dominanten Farbe eines jeden Blockes auf ein Pixel, wobei die dominante Farbe aus Grundfarben erzeugt wird;

E    Rekomposition der Graphik aus den im Verfahrensschritt D bestimmten Pixel;

ist sichergestellt, dass die in der Graphik enthaltenen Konturen bei der Reduktion auf eine geringere Auflösung erhalten bleiben.

Die Gewichtung der die Konturen darstellende Farben kann vorgängig im Verfahrenschritt A abhängig von der jeweiligen Anwendung wie z.B. ein Diagramm mit einer Säulen- oder Linienausgestaltung oder einer Landkarte vorgenommen werden.

Dies erlaubt eine vielfältige Anwendbarkeit der nachfolgenden Verfahrensschritte unabhängig von der besonderen Semantik, die den Konturen einer Graphik innewohnt.

Vorteilhafte Ausgestaltungen der Erfindung sind in weiteren Ansprüchen angegeben.

Die Erfindung wird nachfolgend anhand einer Zeichnung beispielsweise näher erläutert. Dabei zeigt:

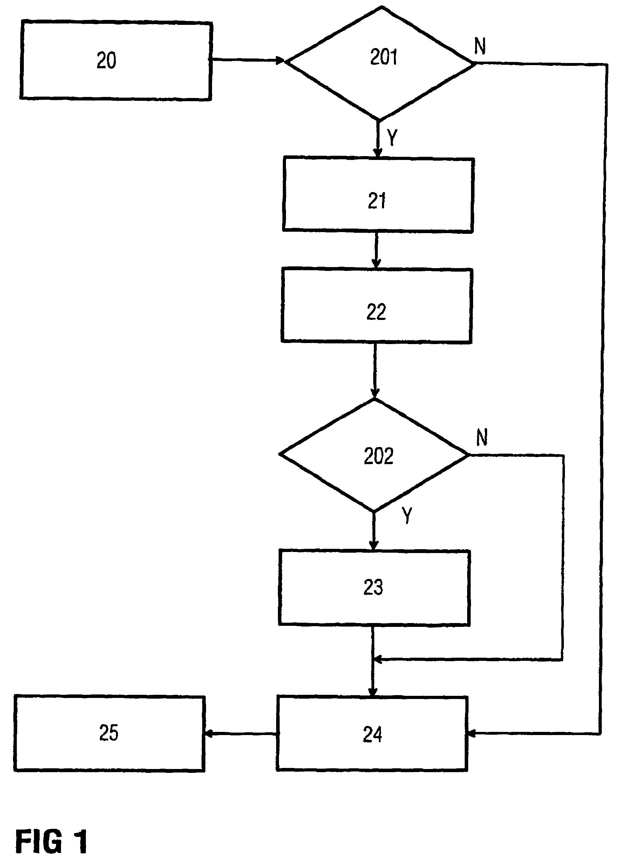

Figur 1    Ablaufdiagramm zur Bearbeitung eines Blockausschnittes in Flussdiagrammdarstellung.

Es wird angenommen, dass die darzustellende Graphik $G$ in einer Pixeldarstellung von $n \cdot m$ Pixel vorliegt; dabei ist jedem Pixel eine Farbe C zugeordnet. Von der auf einer Anzeigeeinheit darzustellenden Graphik $G$ werden zunächst eine Mehrzahl von Blöcken $B_{ij}$ erzeugt, wobei die Indizes je über $i \in \{1, .., M\}$ und $j \in \{1, .., N\}$ laufen. Die Graphik $G$ ergibt sich somit zu:

$$G := [B_{ij}] \ \text{mit} \ i \in \{1, \ .., \ M\}; \ j \in \{1, \ .., \ N\}.$$

Ein Block $B_{ij}$ enthält seinerseits $a \cdot b$ Pixel, vorzugsweise gilt dabei $a = b$, das heisst die Blöcke $B_{ij}$ sind quadratisch. Typische Werte für a und b liegen bei 1, 2, 4 oder 8. Für die vorgenannten Variablen gilt bei einer exakten Zerlegung die Beziehung:

$$n = N \cdot a;$$

$$m = M \cdot b.$$

N, M beinhalten - wie vorstehend formal angegeben - die Anzahl Blöcke pro Zeile resp. pro Spalte der Graphik $G$.

Ist eine solche exakte Zerlegung nicht möglich, so werden z.B. wenige Pixel am Rande der rechteckförmigen Graphik $G$ ignoriert. Da für die Variablen n und m typischerweise Werte zwischen 600 und 1800 vorgesehen sind, ergibt sich mit den vorgenannten Werten für a und b ein sehr geringer Verlust bezüglich der Darstellung der Graphik $G$ auf einer Anzeigeeinheit. Die vorgenannten Werte stellen lediglich Beispiele dar, für grosse TFT-Flachbildschirme sind auch grössere Werte vorzusehen.

Jeder so gebildete Block $B_{ij} \in G$ wird nun wie folgt den Verfahrensschritten gemäss der Figur 1 unterzogen.

Block 20

Auswahl eines Blockes $B_{ij} \in G$.

Verzweigung 201

Abfrage: Reduktion der Anzahl Pixels.

Diese Verzweigung ist für den Fall Nein (Bezugszeichen N) optional und stellt lediglich eine Sicherung dar, damit eine bereits gemäss dem erfindungsgemässen Verfahren reduzierte bzw. verkleinerte Graphik nicht ein weiteres Mal diesem Verfahren unterzogen wird. Im Fall Ja (Bezugszeichen Y) werden die Anzahl Pixels gemäss den in den folgenden Blöcken 21, 22 angegeben Operationen reduziert.

Im Block 21 erfolgt eine Zählung der verschiedenen Farben C des zugrundeliegenden Blockes $B_{ij}$.

Anschliessend wird im Block 22 die dominante Farbe bestimmt. Dazu werden die im Block 21 gezählten Farben gewichtet. Sogenannte Flächenfarben wie z.B. Hellgrün (Waldfläche) oder Hellblau (Seefläche) haben das geringste Gewicht. Konturen zugeordnete Farben wie z.B. schwarz oder dunkelblau haben das höchste Gewicht. Auf diese Weise wird sichergestellt, dass die Konturen bei der Durchschnittsbildung bzw. Reduktion auf weniger Pixel nicht verloren gehen. Ohne diese Gewichtung würde z.B. eine Koordinatenlinie innerhalb einen Wald darstellenden hellgrünen Fläche mindestens teilweise verschwinden. Für die Gewichtung der Farben C werden die in der Tabelle 2 aufgeführten Faktoren $f_c$ herangezogen. Dabei wird unterschieden zwischen Grundfarben C und sogenannten Pseudofarben C. Diese Faktoren $f_c$ sind für eine bestimmte Karte als sogenannt "hart codiert" vorzugeben. Je nach Art der Karte oder den nationalen Gegebenheiten haben die Grundfarben eine andere Bedeutung. Die Gewichtung und die Anlage der Tabelle werden jedoch bevorzugt zum vornherein für eine bestimmte Anwendung vorgenommen und nicht erst bei „Laufzeit" des Verfahrens.

Tabelle 2:

| Gewichtung durch Faktoren $f_c$ der Grund- und Pseudofarben aufgrund ihrer Bedeutung/Semantik. | | |
|---|---|---|
| **Grundfarbe C** | **Faktor $f_c$** | **Bedeutung** |
| weiss | -2 | Hintergrund |
| grün | 1 | Waldrand |
| Blau | 0 | Flüsse, Seeufer |
| braun | 2 | Höhenlinie |
| Schwarz | 2 | Strassen |
| **Pseudofarbe C** | **Faktor $f_c$** | **Bedeutung** |
| hellgrün | -2 | Waldfläche |
| hellblau | -2 | Seefläche |
| gelb | 0 | schmale Strasse |
| orange | 0 | Nationalstrasse 1. Klasse |
| rot-orange | 0 | Landesgrenze |
| rot | 0 | Hauptstrasse |
| dunkelrot | 0 | Eisenbahnlinie |

Für die Bestimmung des gewichteten Durchschnitts wird in diesem Ausführungsbeispiel wie folgt verfahren:

Das Gewicht $g_c$ einer Farbe C berechnet sich über folgende Formel:

$$g_C := h_C + f_C \cdot f_s \qquad \qquad F_1$$

wobei

$h_c$     Anzahl der Pixel mit der Farbe C;
$f_c$     Faktor der Farbe C;
$f_s$     quadrierter Skalierungsfaktor $F_s / 4$.

Der quadrierte Skalierungsfaktor $F_s$ ergibt sich aus dem zu reduzierenden Pixelformat, im vorliegenden Beispiel aus

$$F_s = 4 \cdot 4 = 16.$$

Die vorgenannte Formel $F_1$ für die Berechnung des Gewichtes $g_c$ einer Farbe C wird anhand eines Beispieles für einen Block $B_{ij}$ von $4 \cdot 4$ Pixel in Tabelle 3 wie folgt erläutert:

Tabelle 3:

| Berechnung des Gewichtes $g_c$ einer Farbe C. | | | |
|---|---|---|---|
| **Farbe C** | **Amzahl $h_c$ der Pixel mit der Farbe C** | **Formel mit Zahlen** | **Gewicht $g_c$ der Farbe C** |
| schwarz | 5 | 5 + 2 * 4 | 13 |
| hellgrün | 9 | 9 - 1 * 4 | 5 |
| grün | 2 | 2 + 1 * 4 | 6 |
| | 16 | | |

Somit resultiert aus der Bestimmung der dominanten Farbe die Farbe schwarz. Es sei an dieser Stelle angemerkt, dass die vorstehende Formel $F_1$ für das Gewicht $g_c$ ein Beispiel einer Gewichtung darstellt. Es wäre auch möglich die Gewichtung rein multiplikativ vorzunehmen und nicht gemischt wie in der vorstehend aufgeführten Formel.

Für die dem Block 22 nachfolgende Verzweigung 202 ist es möglich, diese Verzweigung 202 allein aufgrund der Entscheidung für die dominante Farbe vorzunehmen oder die gefundenen Gewichte $g_c$ für die verschiedenen Farben en bloc zur Entscheidung heranzuziehen.

Anschliessend folgt die bereits genannte weitere Verzweigung 202. Hier wird, falls die Anzahl Pixels der dominanten Farbe schwarz kleiner ist als die Gesamtzahl der Pixels in einem Block $B_{ij}$, gemäss der folgenden Tabelle eine Farbdarstellung generiert. Zur Vereinfachung der Darstellung wird dabei für einen Block $B_{ij}$ hier lediglich eine Grösse von 2 · 2 Pixels angenommen:

Tabelle 4:

| Erzeugung von Schattenfarben | |
|---|---|
| **Anzahl Pixel der dominanten Farbe schwarz** | **Abbildung auf ein Pixel der Farbe** |
| 4 | schwarz |
| 3 | schwarz |
| 2 | braun |
| 1 | braun |

Im Fall von 4 Pixeln erfolgt direkt eine Zuordnung der Farbe schwarz auf das betreffende Pixel.

Im Block 23 (=Anti-aliasing mit Gewichtung) wird festgestellt, welche der zur Verfügung stehenden Grundfarben am Besten die dominante Farbe und die gefundenen Gewichte repräsentiert. In diesem Beispiel kommt dies nur für die Farbe Schwarz mit ihrer Schattierung Braun in Frage, da für die anderen Farben keine Schattierungen zur Verfügung stehen. Für diese Farben können aber die Pseudofarben als Schattierung verwendet werden.

Aufgrund der vorgängig bestimmten Farben pro »reduziertem" Block $B_{ij}$ erfolgt daher im Block 24 die Farbbestimmung aufgrund von für eine Anzeigeeinheit vorhandenen »Grundfarben". Im vorliegenden Fall sind das die ersten fünf Zeilen der Tabelle 5.

Tabelle 5:

| Erzeugung von Pseudofarben aus den Grundfarben. | | | | | | |
|---|---|---|---|---|---|---|
| **Farbe C (Eingang)** | **Farbe (Ausgang)** | **weiss W** | **grün G** | **blau B** | **braun N** | **schwarz Z** |
| weiss | W100 | 100% | | | | |
| grün | G100 | | 100% | | | |
| blau | B100 | | | 100% | | |
| braun | N100 | | | | 100% | |
| schwarz | Z100 | | | | | 100% |
| | Pseudo-farben | | | | | |

Tabelle 5: (fortgesetzt)

| Erzeugung von Pseudofarben aus den Grundfarben. | | | | | | |
|---|---|---|---|---|---|---|
| Farbe C (Eingang) | Farbe (Ausgang) | weiss W | grün G | blau B | braun N | schwarz Z |
| hellgrün | W50G50 | 50% | 50% | | | |
| hellblau | W75B25 | 75% | | 25% | | |
| gelb | W50N25Z25 | 50% | | | 25% | 25% |
| orange | W50N50 | 50% | | | 50% | |
| rot-orange | G25N75 | | 25% | | 75% | |
| rot | N100 | | | | 100% | |
| dunkelrot | N50Z50 | | | | 50% | 50% |

Die zweite Spalte der Tabelle 5 gibt den Ausgang in einer codierten Form für eine bestimmte Farbe in der erste Spalte an. Die Spalten mit den Überschriften „weiss W", grün G", usw. geben die Codierung/Gewichtung aufgrund der vorhandenen Grundfarben C an. Anstelle des Begriffes Codierung/Gewichtung wird diese Generierung von Pseudofarben auch als vorgegebene Linearkombination von Grundfarben bezeichnet.

Beispiel 1: Erzeugung von W50N25Z25 mittels Farbdithering

In einem 2 · 2 Dithering-Block werden die Farben wie folgt angeordnet:

Tabelle 6:

| 2 · 2 Dithering-Block $D_{W50N25z25}$ (i, j ) | |
|---|---|
| Weiss | BrauN |
| ScharZ | Weiss |

Beispiel 2: Erzeugung von W66B34 mittels Farbdithering

In einem 3 · 3 Dithering-Block werden die Farben wie folgt angeordnet:

Tabelle 7:

| 3 · 3 Dithering-Block $D_{W66B34}$ (i, j) | | |
|---|---|---|
| Blau | Weiss | Weiss |
| Weiss | Weiss | Blau |
| Weiss | Blau | Weiss |

Dazu ist noch folgende Anmerkung anzubringen: Blöcke $B_{ij}$ mit identischen Farben, aber verschiedenen Positionen (i,j) erzeugen beim Farbdithering eine andere Farben. Zum Beispiel bei der Verwendung des Dithering-Blocks W66B34 wird die Farbe $D_{W66B34}$ (i mod 3, j mod 3) erzeugt.

Ist bei der Verzweigung 201 die Entscheidung auf keine Reduktion zu treffen, so erfolgt im Block 24 für die betreffenden Pixels lediglich eine Festlegung der Farbe C aus den vorgegebenen Grundfarben gemäss der Tabelle 5.

Der Block 25 enthält die resultierende Darstellung (=Output) für ein Pixel als Ergebnis der Eingabe 20 (=Input) für einen Block $B_{ij} \in \mathcal{G}$ der darzustellenden Graphik $\mathcal{G}$.

Der Ablauf gemäss der Fig. 1 stellt einen Durchlauf dar für einen Block $B_{ij}$ oder im Fall der Nicht-Reduktion für ein Pixel. Zur Darstellung einer Graphik $\mathcal{G}$ wird der Ablauf gemäss Fig. 1 iteriert durchgeführt. Die Schritte der Zerlegung in Blöcke $B_{ij}$ wie auch die Rekomposition der Graphik $\mathcal{G}$ aus den so erzeugten Pixeln stellen eine fachmännische Massnahme dar und sind daher in dieser Schrift nicht weiter erläutert. Ebenso wird auf die Transformation der Graphik $\mathcal{G}$ in einer vektorisierten Form in die vorgenannte Pixelform nicht weiter eingegangen.

Das vorgenannte Ausführungsbeispiel stellt lediglich eine Implementation des erfindungsgemässen Verfahrens dar. Das erfindungsgemässe Verfahren kann abhängig von den Möglichkeiten der Darstellung auf einer Anzeigeeinheit mit anderen Farben C und mit einer anderen Anzahl von Grundfarben durchgeführt werden. Die Gewichtung der Farben C ist nur bedingt durch die jeweilige Semantik und dementsprechend an eine bestimmte Anwendung gebunden. Möglich ist auch, die vorgegebenen sogenannt »hart codierten" Tabellen zu indizieren, wobei jeder Index für eine bestimmte Anwendung steht. Auf eine wie in Tabelle 8 dargestellte Weise können in der Art und Semantik verschiedenste Graphiken $G$ mit dem gleichen Verfahren automatisiert auf die Möglichkeiten einer Anzeigeeinheit so reduziert werden, dass die Bedeutung der einzelnen Elemente wie insbesondere die Konturen der jeweiligen Graphik $G$ erhalten bleiben.

Tabelle 8:

| Index zur Indizierung der Tabellen 1, 2 und 4. | |
| --- | --- |
| **Index** | **Anwendung** |
| 0 | Kartendarstellung in CH-Semantik. |
| 1 | Kartendarstellung in IT-Semantik. |
| 2 | Darstellung von Temperaturverläufen. |
| 3 | Darstellung von Börsenindizes. |
| .. | .. |

Auf den folgenden Seiten ist der Code des Ausführungsbeispiels für die Darstellung einer geographischen Karte in der Sprache C aufgeführt.

**Code in der Programmiersprache C des gemäss Figur 1 dargestellten Ablaufes**

```
//////////////////////////////////////////////
// Weighted Anti-aliasing and Color Dithering code
//////////////////////////////////////////////

#define WHITE 0
#define BROWN 1
#define BLUE  2
#define BLACK 3
#define GREEN 4
#define DARK_GREEN 5
#define DARK_BLUE 6
#define RED 7
#define DARK_RED 8
#define YELLOW 9
#define GRAY 10
#define ORANGE 11
#define RED_ORANGE 12

//Dithered colors:
//Light Green: Combinations of White and Green
#define WHITE75_GREEN25 20
#define WHITE50_GREEN50 21
#define WHITE25_GREEN75 22
#define BLACK25_GREEN75 27

//Light Blue: Combinations of White and Blue
#define WHITE75_BLUE25 30
#define WHITE50_BLUE50 31
#define WHITE25_BLUE75 32
#define BLACK25_BLUE75 37

//Light Black: Combinations of White and black
#define WHITE75_BLACK25 40
#define WHITE50_BLACK50 41
#define WHITE25_BLACK75 42

//Light Brown: Combinations of White and browN
#define WHITE75_BROWN25 50
#define WHITE50_BROWN50 51
#define WHITE25_BROWN75 52
#define WHITE62_BROWN38 53
#define WHITE67_BROWN33 54
#define WHITE50_BROWN25_BLACK25 55
#define BLACK50_BROWN50 58

//Combination of Green and browN:
#define GREEN75_BROWN25 60
#define GREEN50_BROWN50 61
#define GREEN25_BROWN75 62


void Tile::Write_all()
{
    Strip_index  Strip = 0;

    // Before saving images apply Anti-Aliasing routine
    Anti_aliasing();

    while (Strip < Temp_Tile_Side) {
        Write (Strip);
        Strip += Scale_Change;
    }
```

```
        Empty_all ();
}


void   Tile::Anti_aliasing()
{
    //Apply Anti-aliasing only if there is a scale change.
    //Otherwise do only color dithering:
    if (Scale_Change == 1) {
            Dither_tile();
            return;
    }

    const int Scale_square_2 = Scale_Change * Scale_Change / 2.0;
    const int Scale_square_4 = Scale_Change * Scale_Change / 4.0;
    int colors_num = 13;
    int colors[16];
    int max, i;
    int dominant_color, color;
    int colors_add[16];
    int PixelIndex;

    //Initialize counter of pixel colors:
    for (i = 0; i < colors_num; i++) {
            colors_add[i]=0;
    }

    // Emphasize BROWN and BLACK:
    colors_add[BROWN] = Scale_square_4;
    colors_add[BLACK] = Scale_square_4;

    // Little Emphasize for DARK_GREEN and DARK_BLUE:
    colors_add[DARK_GREEN] = Scale_square_4/2;
    colors_add[DARK_BLUE] = 0;

    // Penalty for surface colors:
    colors_add[WHITE] = -Scale_square_4;
    colors_add[GREEN] = -Scale_square_4;
    colors_add[BLUE] = -Scale_square_4;

    //Double loop over all tiles:
    for ( int  y = 0, yEven = 1, yEven3 = 1;
          y < Temp_Tile_Side;
          y += Scale_Change, yEven = 1 - yEven)
          {
          if( ++yEven3 >= 4) {yEven3 = 0;}
          for ( int x = y * Temp_Tile_Side, xEven = 1, xEven3 = 1;
                x < (y+1) * Temp_Tile_Side;
                x += Scale_Change, xEven = 1 - xEven)
                {
                if( ++xEven3 >= 4) {xEven3 = 0;}

                // Count colors in pixel block
                for (i = 0; i < colors_num; i++) {
                        colors[i] = 0;
                }
                for (int x0 = 0; x0 < Scale_Change; x0++){
                        for (int y0 = 0; y0 < Scale_Change; y0++){
                                colors[Tile_pixels[x + x0 + y0 *
                                Temp_Tile_Side]]++;
                        }
                }

                // Find color with maximum count:
                dominant_color = WHITE;
                max = 0;
                for (i = 0; i < colors_num; i++) {
                        colors[i] += colors_add[i];
```

9

```
                if(colors[i] >= max) {
                        max = colors[i];
                        dominant_color = i;
                }
        }

        //Antialiasing of BLACK color: IF BLACK is not
        //omnipresent replace it by BROWN:
        if(dominant_color == BLACK) {
                if(colors[WHITE] >= Scale_square_4 &&
                    colors[WHITE] <  Scale_square_2 &&
                    colors[BLACK] >=  Scale_square_2) {
                        dominant_color = BROWN;
                }
        }

        //Color dithering using the dithering pattern:
        dominant_color = Dither_color(dominant_color, xEven,
                                        yEven, xEven3, yEven3);

        // Set dominant_color in a pixel block
        // with side length Scale_change:
        for (int y0 = 0; y0 < Scale_Change; y0++){
                PixelIndex = x + y0 * Temp_Tile_Side;

                for (int x0 = 0; x0 < Scale_Change;
                    x0++, PixelIndex++){
                        Tile_pixels[PixelIndex] = dominant_color;
                }
        }

            }
        }

    }


//Dithering without down scaling:
void Tile::Dither_tile()
{
        srand(1);
        int PixelIndex;
        for ( int  y = 0, yEven = 1, yEven3 = 1;
                y < Temp_Tile_Side;
                y++, yEven = 1 - yEven)
                {
                if( ++yEven3 >= 4) {yEven3 = 0;}
                PixelIndex = y * Temp_Tile_Side;
                        for ( int  x = 0, xEven = 1, xEven3 = 1;
                                x < Temp_Tile_Side;
                                x++, PixelIndex++, xEven = 1 - xEven)
                                {
                                if( ++xEven3 >= 4) {xEven3 = 0;}
                                Tile_pixels[PixelIndex] =
                                        Dither_color(Tile_pixels[PixelIndex],
                                                xEven, yEven, xEven3, yEven3);
                        }
        }
        return;
}

//The toggle Even allows to select the position in the dithering pattern:
//Even toggles every bit between 0 and 1.
//Even3 changes every bit from 0 to 1 to 2 and then start over again.

int Tile::Dither_color(int color, int xEven, int yEven, int xEven3, int
yEven3)
{
```

```
switch(color) {
case WHITE:
    break;

case BLACK:
    break;

case BROWN:
    break;

case YELLOW:
    color = WHITE50_BROWN25_BLACK25;
    break;

case ORANGE:
    color = WHITE50_BROWN50;
    break;

case RED_ORANGE:
    color = GREEN25_BROWN75;
    break;

case RED:
    color = BROWN;
    break;

case DARK_RED:
    color = BLACK;
    break;

case BLUE:
    color = WHITE75_BLUE25;
    break;

case DARK_BLUE:
    color = BLUE;
    break;

case GREEN:
    color = WHITE50_GREEN50;
    break;

case DARK_GREEN:
    color = GREEN;
    break;

}

//For simple color return immediatley:
if(color <= RED_ORANGE) {
    return color;
}

// For pseudo color generate dithering pattern:
  switch(color) {

    //Light Green: Combinations of White and Green ------------------
--
  case WHITE75_GREEN25:
        // 75% WHITE and 25% GREEN
        if((yEven == 1) || (xEven == 1) ) {
              color = WHITE;
        } else {
              color = GREEN;
        }
        break;
    case WHITE50_GREEN50:
        // 50% WHITE and 50% GREEN
```

EP 1 477 931 A1

```
                if(yEven == xEven) {
                        color = WHITE;
                } else {
                        color = GREEN;
                }
                break;
        case WHITE25_GREEN75:
                // 25% WHITE and 75% GREEN
                if((yEven == 1) && (xEven == 1) ) {
                        color = WHITE;
                } else {
                        color = GREEN;
                }
                break;
        case BLACK25_GREEN75:
                // 25% BLACK and 75% GREEN
                if((yEven == 1) && (xEven == 1) ) {
                        color = BLACK;
                } else {
                        color = GREEN;
                }
                break;

        //Light Blue: Combinations of White and Blue --------------------
        case WHITE75_BLUE25:
                // 75% WHITE and 25% BLUE
                if((yEven == 1) || (xEven == 1) ) {
                        color = WHITE;
                } else {
                        color = BLUE;
                }
                break;
        case WHITE50_BLUE50:
                // 50% WHITE and 50% BLUE
                if(yEven == xEven) {
                        color = WHITE;
                } else {
                        color = BLUE;
                }
                break;
        case WHITE25_BLUE75:
                // 25% WHITE and 75% BLUE
                if((yEven == 1) && (xEven == 1) ) {
                        color = WHITE;
                } else {
                        color = BLUE;
                }
                break;
        case BLACK25_BLUE75:
                // 25% BLACK and 75% BLUE
                if((yEven == 1) && (xEven == 1) ) {
                        color = BLACK;
                } else {
                        color = BLUE;
                }
                break;

        //Light Black: Combinations of White and blacK ------------------
--
        case WHITE75_BLACK25:
                // 75% WHITE and 25% BLACK
                if((yEven == 1) || (xEven == 1) ) {
                        color = WHITE;
                } else {
                        color = BLACK;
                }
                break;
        case WHITE50_BLACK50:
```

12

```
        // 50% WHITE and 50% BLACK
        if(yEven == xEven) {
                color = WHITE;
        } else {
                color = BLACK;
        }
        break;
  case WHITE25_BLACK75:
        // 25% WHITE and 75% BLACK
        if((yEven == 1) && (xEven == 1) ) {
                color = WHITE;
        } else {
                color = BLACK;
        }
        break;

    //Light Brown: Combinations of White and browN ------------------
--
  case WHITE75_BROWN25:
        // 75% WHITE and 25% BROWN
        if((yEven == 1) || (xEven == 1) ) {
                color = WHITE;
        } else {
                color = BROWN;
        }
        break;
  case WHITE50_BROWN50:
        // 50% WHITE and 50% BROWN
        if(yEven == xEven) {
                color = WHITE;
        } else {
                color = BROWN;
        }
        break;
  case WHITE25_BROWN75:
        // 25% WHITE and 75% BROWN
        if((yEven == 1) && (xEven == 1) ) {
                color = WHITE;
        } else {
                color = BROWN;
        }
        break;
case WHITE62_BROWN38:
        // 37.5% BROWN and 62.5% WHITE
        if(yEven3 == xEven3 || (yEven3 + xEven3 == 2)) {
                color = BROWN;
        } else {
                color = WHITE;
        }
        break;
case WHITE67_BROWN33:
        // 33% BROWN and 67% WHITE
        if(yEven3 == xEven3) {
                color = BROWN;
        } else {
                color = WHITE;
                if(yEven3 == 0 && xEven3 == 1) {
                        color = BROWN;
                }
        }
        break;
case WHITE50_BROWN25_BLACK25:
    // 25% BROWN, 25% BLACK and 50% WHITE
        if((yEven == xEven) ) {
                color = BROWN;
                if (yEven == 1) {
                        color = BLACK;
                }
```

```
                } else {
                        color = WHITE;
                }
                break;
        case BLACK50_BROWN50:
                // 50% BLACK and 50% BROWN
                if(yEven == xEven) {
                        color = BLACK;
                } else {
                        color = BROWN;
                }
                break;

            //Combination of Green and browN: --------------------
        case GREEN75_BROWN25:
                // 75% GREEN and 25% BROWN
                if((yEven == 1) || (xEven == 1) ) {
                        color = GREEN;
                } else {
                        color = BROWN;
                }
                break;
        case GREEN50_BROWN50:
                // 50% GREEN and 50% BROWN
                if(yEven == xEven) {
                        color = GREEN;
                } else {
                        color = BROWN;
                }
                break;
        case GREEN25_BROWN75:
                // 25% GREEN and 75% BROWN
                if((yEven == 1) && (xEven == 1) ) {
                        color = GREEN;
                } else {
                        color = BROWN;
                }
                break;

        }

        return color;

    }
```

**Liste der verwendeten Bezugszeichen und Variablenbelegung**

20     Block $B_{ij}$ als Teil einer Graphik $G_j$ in Pixeldarstellung (=Input)

21     Zählung der verschiedenen Farben in einem Block

22     Bestimmung der dominanten Farbe

23     Bestimmung der Schattendarstellung der dominanten Farbe (=Anti-aliasing mit Gewichtung)

24     Farbbestimmung aufgrund von für eine Anzeigeeinheit verfügbaren Grundfarben für ein Pixel aus einem Block $B_{ij}$ (Dithering)

25     resultierende Darstellung für ein Pixel (=Output)

201     Abfrage: Reduktion der Anzahl Pixels

202   Abfrage: Gibt es eine geeignetere Farbe zur Darstellung der dominante Farbe

$B_{ij}$   Block von $a \cdot b$ Pixel; $B_{ij} \in \mathcal{G}$

a   Anzahl Pixel einer Zeile eines Blockes $B_{ij}$

b   Anzahl Pixel einer Spalte eines Blockes $B_{ij}$

$\mathcal{G}$   darzustellende bzw. zu zerlegende Graphik

i   laufender Zeilenindex der in Blöcke $B_{ij}$ zu zerlegenden Graphik

j   laufender Spaltenindex der in Blöcke $B_{ij}$ zu zerlegenden Graphik

n   Anzahl Pixel einer Zeile der darzustellenden Graphik

m   Anzahl Pixel einer Spalte der darzustellenden Graphik

N   Anzahl Blöcke $B_{ij}$ einer Zeile der zu zerlegenden Graphik

M   Anzahl Blöcke $B_{ij}$ einer Spalte der zu zerlegenden Graphik

**Liste der verwendeten Akronyme**

TFT-Display   Thin Film Transistor Display

**Literaturliste**

EP 1 056 047 A1   "Method and apparatus for antialiased imaging of graphical objects; Siemens Aktiengesellschaft, München

**Patentansprüche**

1.  Verfahren zur Darstellung von einer Konturen und Flächen enthaltenden Graphik ( $\mathcal{G}$ ) auf einer Anzeigeeinheit, wobei die Graphik ( $\mathcal{G}$ ) in Form von $m \cdot n$ Pixeln vorliegt und jedem Pixel eine Farbe (C) zugeordnet ist; **gekennzeichnet durch** die Verfahrensschritte

    A   Zuordnung einer Gewichtung der Konturen darstellende Farben und der Flächen darstellenden Farben;
    B   Zerlegung der Graphik ( $\mathcal{G}$ ) in Blöcke ($B_{ij}$), die je $a \cdot b$ Pixel aufweisen;
    C   Bestimmung der dominanten Farbe (C) eines jeden Blockes ($B_{ij}$) aufgrund der im Verfahrenschritt A erfolgten Gewichtung;
    D   Abbildung der dominanten Farbe (C) eines jeden Blockes ($B_{ij}$) auf ein Pixel, wobei die dominante Farbe (C) aus Grundfarben (weiss, grün, blau, braun, schwarz) erzeugt wird.
    E   Rekomposition der Graphik ( $\mathcal{G}$ ) aus den im Verfahrensschritt C bestimmten Pixel.

2.  Verfahren nach Anspruch 1,
    **dadurch gekennzeichnet, dass**
    im Verfahrensschritt A den Farben (C) der Graphik ( $\mathcal{G}$ ) eine Semantik und davon abhängig ein Faktor ($f_c$) zu einer Gewichtung der Farben (C) zugeordnet ist, und diejenige als dominante Farbe (C) bestimmt wird, die das höchste Gewicht aufweist.

3.  Verfahren nach Anspruch 1 oder 2,
    **dadurch gekennzeichnet, dass**

im Verfahrensschritt C diejenige als dominante Farbe (C) bestimmt wird, die das höchste Gewicht aufweist.

**4.** Verfahren nach einem der Ansprüche 1 bis 3,
**dadurch gekennzeichnet, dass**
die Gewichtung der Farben (C) mit in einer Datenstruktur gespeicherten Faktoren ($f_c$) vorgenommen wird.

**5.** Verfahren nach Anspruch 4,
**dadurch gekennzeichnet, dass**
die Datenstruktur die den Farben (C) zugeordnete Semantik enthält.

**6.** Verfahren nach einem der Ansprüche 4 bis 5,
**dadurch gekennzeichnet, dass**
das Gewicht $g_c$ einer Farbe (C) nach der Formel berechnet wird:

$$g_c := h_c + f_c \cdot f_s$$

mit der Belegung der Variablen

$h_c$     Anzahl der Pixel mit der Farbe C;
$f_c$     Faktor der Farbe C;
$f_s$     quadrierter Skalierungsfaktor.

**7.** Verfahren nach einem der Ansprüche 2 bis 6;
**dadurch gekennzeichnet, dass**
im Verfahrensschritt D aus den Gewichten ($g_c$) der gezählten Farben (C) diejenige aus den zur Verfügung stehenden Grundfarben (C) oder Pseudofarben (C) ausgewählt wird, die der dominanten Farbe am nächsten kommt, wobei eine Pseudofarbe (C) durch eine vorgegebene Linearkombination von Grundfarben definiert ist.

**8.** Verfahren nach einem der Ansprüche 1 bis 7;
**dadurch gekennzeichnet, dass**
die Graphiken ( $\mathcal{G}$ ) nach Anwendungen indiziert werden, wobei die Konturen der Anwendung entsprechend je eine bestimmte Semantik aufweisen und die Verfahrensschritte B und C für jeden Index (k) eine eigene Implementation aufweisen.

**9.** Verfahren nach einem der Ansprüche 1 bis 8,
**dadurch gekennzeichnet, dass**
im Verfahrensschritt A die Blöcke ($B_{ij}$) mit a= b dimensioniert sind.

**Geänderte Patentansprüche gemäss Regel 86(2) EPÜ**

**1.** Verfahren zur Darstellung von einer Konturen und Flächen enthaltenden Graphik ( $\mathcal{G}$ ) auf einer Anzeigeeinheit, wobei die Graphik ( $\mathcal{G}$ ) in Form von m · n Pixeln vorliegt und jedem Pixel eine Farbe C zugeordnet ist; wobei n für die Anzahl Pixel einer Zeile und m für die Anzahl Pixel einer Spalte der darzustellenden Graphik ( $\mathcal{G}$ ) steht,
**gekennzeichnet durch** die Verfahrensschritte

    i) Zuordnung einer Gewichtung der Konturen darstellende Farben und der Flächen darstellenden Farben, wobei die Gewichtung **durch** einen **durch** eine jede Farbe C bestimmten Faktor $f_c$ vorgenommen wird;
    ii) Zerlegung der Graphik ( $\mathcal{G}$ ) in Blöcke ($B_{ij}$), die je a · b Pixel aufweisen; wobei a für die Anzahl Pixel einer Zeile und b für die Anzahl Pixel einer Spalte eines Blockes ($B_{ij}$) steht,
    iii) Bestimmung der dominanten Farbe C eines jeden Blockes ($B_{ij}$) aufgrund der im Verfahrenschritt A erfolgten Gewichtung;
    iv) Abbildung der dominanten Farbe C eines jeden Blockes ($B_{ij}$) auf ein Pixel, wobei die dominante Farbe C aus Grundfarben (weiss, grün, blau, braun, schwarz) erzeugt wird.
    v) Rekomposition der Graphik ( $\mathcal{G}$ ) aus den im Verfahrensschritt iv) bestimmten Pixel.

**2.** Verfahren nach Anspruch 1,

**dadurch gekennzeichnet, dass**

im Verfahrensschritt iii) diejenige als dominante Farbe C bestimmt wird, die den für die Gewichtung höchsten Faktor $f_c$ aufweist.

**3.** Verfahren nach der Anspruch 1 oder 2,
**dadurch gekennzeichnet, dass**
die Gewichtung der Farben C mit in einer Datenstruktur gespeicherten Faktoren $f_c$ vorgenommen wird.

**4.** Verfahren nach Anspruch 3,
**dadurch gekennzeichnet, dass**
die Datenstruktur eine den Farben C zugeordnete Semantik enthält.

**5.** Verfahren nach einem der Ansprüche 3 oder 4,
**dadurch gekennzeichnet, dass**
das Gewicht $g_c$ einer Farbe C nach der Formel berechnet wird:

$$g_c := h_c + f_c \cdot f_s$$

mit der Belegung der Variablen:

$h_c$ Anzahl der Pixel mit der Farbe C;
$f_c$ Faktor der Farbe C;
$f_s$ quadrierte Skalierungsfaktor, wobei der Skalierungsfaktor aus dem zu reduzierenden Pixelformat bestimmt wird.

**6.** Verfahren nach Anspruch 5;
**dadurch gekennzeichnet, dass**
im Verfahrensschritt iv) aus den Gewichten $g_c$ der gezählten Farben C diejenige aus den zur Verfügung stehenden Grundfarben C oder Pseudofarben C ausgewält wird, die der dominanten Farbe am nächsten kommt, wobei eine Pseudofarbe durch eine vorgegebene Linearkombination von Grundfarben definiert ist.

**7.** Verfahren nach einem der Ansprüche 1 bis 6;
**dadurch gekennzeichnet, dass**
die Graphiken ($G_k$) nach Anwendungen indiziert werden, wobei die Konturen der Anwendung entsprechend je eine bestimmte Semantik aufweisen und die Verfahrensschritte ii) und iii) für jeden Index k eine eigene Implementation aufweisen.

**8.** Verfahren nach einem der Ansprüche 1 bis 7,
**dadurch gekennzeichnet, dass**
im Verfahrensschritt i) die Blöcke ($B_{ij}$) mit a = b dimensioniert sind.

**FIG 1**

**Europäisches Patentamt**

# EUROPÄISCHER RECHERCHENBERICHT

Nummer der Anmeldung

EP 03 01 0942

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 00 46748 A (SAMSUNG ELECTRONICS CO LTD ;UNIV CALIFORNIA (US)) 10. August 2000 (2000-08-10) * Zusammenfassung * * Seite 2, Zeile 16 - Zeile 23 * --- | 1-9 | G06T3/40 G09B29/00 |
| A | EP 0 710 925 A (IBM) 8. Mai 1996 (1996-05-08) * Zusammenfassung * * Seite 2, Zeile 27 - Zeile 34 * --- | 1-9 | |
| A | US 2001/028358 A1 (TANIZAWA TOSHIHIRO) 11. Oktober 2001 (2001-10-11) * Zusammenfassung * * Spalte 1, Absatz 10 * ----- | 1-9 | |

**RECHERCHIERTE SACHGEBIETE (Int.Cl.7)**

G06T
A47B
G09B

Der vorliegende Recherchenbericht wurde für alle Patentansprüche erstellt

| Recherchenort | Abschlußdatum der Recherche | Prüfer |
|---|---|---|
| BERLIN | 9. Dezember 2003 | González Arias, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**    EP 03 01 0942

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-12-2003

| Im Recherchenbericht angeführtes Patentdokument | | Datum der Veröffentlichung | Mitglied(er) der Patentfamilie | | Datum der Veröffentlichung |
|---|---|---|---|---|---|
| WO 0046748 | A | 10-08-2000 | AU | 753599 B2 | 24-10-2002 |
| | | | AU | 2577400 A | 25-08-2000 |
| | | | BR | 0008002 A | 15-01-2002 |
| | | | CA | 2361490 A1 | 10-08-2000 |
| | | | CN | 1341247 T | 20-03-2002 |
| | | | EP | 1153366 A1 | 14-11-2001 |
| | | | JP | 2002536748 T | 29-10-2002 |
| | | | WO | 0046748 A1 | 10-08-2000 |
| | | | KR | 2001013665 A | 28-12-2001 |
| | | | TW | 540008 B | 01-07-2003 |
| | | | US | 2003194126 A1 | 16-10-2003 |
| EP 0710925 | A | 08-05-1996 | US | 5790714 A | 04-08-1998 |
| | | | EP | 0710925 A2 | 08-05-1996 |
| | | | JP | 2921659 B2 | 19-07-1999 |
| | | | JP | 8249462 A | 27-09-1996 |
| US 2001028358 | A1 | 11-10-2001 | JP | 2001292311 A | 19-10-2001 |

EPO FORM P0461

Für nähere Einzelheiten zu diesem Anhang : siehe Amtsblatt des Europäischen Patentamts, Nr.12/82